# EUROPEAN PATENT SPECIFICATION

(11) **EP 1 914 759 B1**
(45) Date of publication and mention of the grant of the patent: **26.08.2009**
(21) Application number: 06794049.4
(22) Date of filing: 26.06.2006
(51) Int. Cl.: G21C 3/326

(54) **FUEL ELEMENT FOR PRESSURISED WATER NUCLEAR REACTORS AND METHOD OF LOADING FUEL ELEMENTS INTO A NUCLEAR REACTOR CORE**
BRENNSTOFFELEMENT FÜR DRUCKWASSERREAKTOREN UND VERFAHREN ZUM LADEN VON BRENNSTOFFELEMENTEN IN EINEN ATOMREAKTORKERN
ELEMENT COMBUSTIBLE POUR REACTEURS NUCLEAIRES A EAU SOUS PRESSION ET PROCEDE DE CHARGEMENT D'ELEMENTS COMBUSTIBLES DANS UN NOYAU DE REACTEUR NUCLEAIRE

(30) Priority: 27.06.2005 ES 200501568
(43) Date of publication of application: 23.04.2008
(73) Proprietor: Enusa Industrias Avanzadas, S.A., 28040 Madrid (ES)
(72) Inventor: MILDRUM, Claude, Michel, E-28040 Madrid (ES); SERRANO RODRIGUEZ, Jose, Francisco, E-28040 Madrid (ES)
(74) Representative: Carpintero Lopez, Francisco
(86) International application number: PCT/ES2006/000374
(87) International publication number: WO 2007/000482

(56) References cited:
- EP-A1- 1 093 129
- EP-A1- 1 521 271
- WO-A-96/20484
- FR-A3- 2 815 761
- US-A- 4 678 629

## Description

### TECHNICAL FIELD OF THE INVENTION

The invention lies in the field of nuclear power, and more specifically in the field of fuel assemblies used in Pressurised Water Reactors (PWR).

### BACKGROUND OF THE INVENTION

There are various types of nuclear reactors, such as Boiling Water Reactors (BWR), pressurised water reactors (PWR), etc. In the aforementioned two types of reactor, fuel assemblies are used comprising a plurality of nuclear fuel rods, arranged in a matrix form, in rows and columns. These rods include pellets of fuel, such as uranium (U), in the form of uranium oxide (UO₂), normally enriched in U-235.

An example of a fuel assembly of this type, and of fuel rods and the corresponding fuel pellets is described in European patent application no. EP-A-0369305. Other examples of fuel assemblies and rods for pressurised water or boiling water reactors are described in patents or patent applications US-A-4587090, US-A-4649020, US-A-4728487, US-A-4378329, US-A-4629599, GB-A-1280366, EP-A-0799484 and EP-A-0155865.

The group of fuel assemblies loaded inside the vessel constitutes the reactor core. In pressurised water and boiling water reactors the core is cooled by water, which in turn acts as a neutron moderator, to extract the energy produced by the fission of the fissionable matter (basically U-235). As the fissionable material is exhausted, the reactivity of the system diminishes. Therefore, to keep the reactor working it is necessary to introduce new fuel assemblies periodically. The new core, after introducing the fresh fuel, must have excess reactivity to allow operation for a sufficiently long time (one year or more) between reloads.

To control this excess reactivity at the start of the cycle, combustible poisons are generally used. Combustible poisons are neutron-absorbing substances (i.e. with a high effective absorption section) which, when capturing a neutron become an inert substance. Depending on how they are added to the fuel, combustible poisons can be divided into: (1) integrated poisons, when the absorbent material is incorporated in the fuel pellets; and (2) discrete poisons, when the absorbent material is introduced in the core as part of a device (generally a bundle of absorbing rods) that is coupled to the fuel assembly using the housings provided for the control rods.

The present invention relates to fuel assemblies for pressurised water reactors.

The use of combustible poisons, initially limited to the first cores of pressurised water reactors (in which all the fuel loaded is fresh fuel) has become generalised in reloading cores (in which only part of the core is loaded with fresh fuel) as a result of the extension of cycles and the need to improve the control of the power distribution in reloading cores.

In short cycles, it is possible to compensate the excess reactivity at the beginning of the cycle (BOC) exclusively with the boron dissolved in the coolant. The concentration of boron in the coolant is maximum at the beginning of the cycle, when the excess reactivity is greater, and is gradually reduced with the burnup as the core reactivity falls due to the fuel burnup and the appearance of fission products with high neutron absorption effective sections (neutron poisons).

For longer cycles the excess reactivity at BOC is greater, and excessively high boron concentrations would be needed to compensate this, not admissible due to their adverse effect on the fuel and on the operation of the station. Among the adverse effects associated to high boron concentrations can be mentioned:
- A more positive moderator temperature coefficient;
- A reduced effectiveness of the station safety systems;
- An increased severity of some accidents discussed in the Final Safety Study, such as those related to boron dilution;
- An increased concentration of lithium (Li) that contributes to a faster corrosion of the fuel and/or other materials of the primary.

To achieve longer cycles, improving cycle economy, it has been necessary to increase the number of fresh assemblies loaded after the previous cycle outage, as well as its enrichment in fissile matter (normally U-235). In addition, the arrangement of the assemblies in the core has evolved from the early "out-in" loading schemes (in which the fresh fuel was mainly in the outer part of the core), to current low-leak arrangements (in which the burnt fuel is loaded on the periphery to reduce neutron leaks).

With the introduction of low-leak schemes the power distribution tends to be less even, causing the appearance of local peaks that cannot be controlled only by adding an evenly distributed poison among the fuel assemblies, as is the case with boron dissolved in the coolant. Therefore, it is necessary to include poison assemblies that affect differently and selectively the various areas of the reactor core and/or the fuel assemblies.

The use of combustible poisons that can be positioned selectively in the reactor, together with the boron dissolved in the coolant (which as stated above is evenly distributed) allows compensating the excess reactivity at the beginning of the life cycle and obtaining an even power distribution in long cycles. Among combustible poisons, *integrated poisons* have two main advantages:
(1) they do not generate waste; and
(2) their position in the core is not limited to positions without control rods (all combustible assemblies for pressurised water reactors, in addition to fuel rods, generally comprise positions intended to receive control rods used to moderate the combustion and stop it in case of emergency; however, in the cores of PWR said rods are only present in correspondence with part of the assemblies, so that in the remaining assemblies the positions occupied by said rods in the matrix of rods are free and can be used to house *discrete poison* rods).

As a counterpart, the element resulting from neutron absorption is not completely inert, giving rise to a small remnant penalty during the entire lifetime of the fuel.

Gadolinium oxide (Gd₂O₃) synthesised with UO₂ in fuel pellets is the integrated combustible poison most widely used in boiling water reactors and is increasingly used in pressurised water reactors (although, due to the conceptual differences between the operation of these two types of reactors, the manner in which gadolinium oxide is used in PWR is different from that of BWR). Some of the documents mentioned above describe examples of the use of gadolinium oxide in different types of reactors.

In current applications for long cycles between 18 and 24 months in pressurised water reactors, mixtures are generally used with high and low gadolinium concentration as a single combustible poison or in combination with other poisons. In these designs, the high-concentration gadolinium oxide (typically from 6% to 10% by weight) is mainly meant to control the power distribution and the power peak factors throughout the entire cycle, while the low-concentration gadolinium oxide (from 0.5% to 2% by weight) is used to reduce the concentration of soluble boron in the first part of the cycle, to prevent the adverse effects associated to high boron concentrations at the BOC described above.

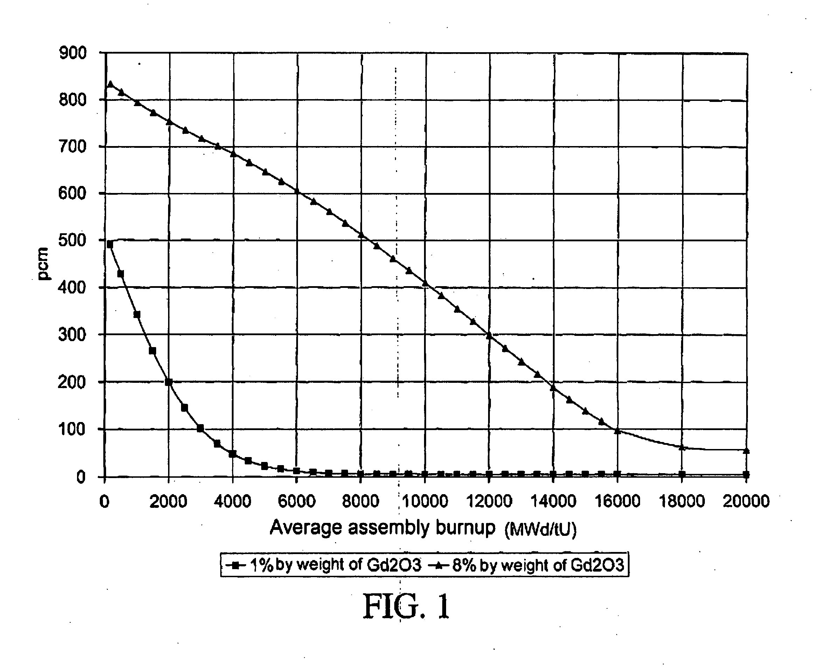

The simultaneous use of high and low concentration gadolinium oxide is based on the different evolution with burnup of the (negative) reactivity of gadolinium oxide as a function of its initial concentration. Figure 1 compares the effect on reactivity of a fuel assembly of a rod of gadolinium oxide 1% by weight and another of 8% by weight (the percentages relate to the proportion of gadolinium oxide with respect to the total weight of a fuel pellet that can comprise said gadolinium oxide and, for example, uranium oxide (UO₂)). As shown in Figure 1 (vertical axis: effect on assembly reactivity of gadolinium oxide rod in pcm; horizontal axis: average burnup of the assembly in MWd/tU), the value of the low-concentration gadolinium oxide is considerably lower than that of the high-concentration gadolinium oxide for the fresh fuel (0 MWd/tU burnup), but more importantly, it falls much faster with combustion than the value of high-concentration gadolinium oxide so that, in the case of gadolinium oxide with a 1% concentration by weight the effect nearly disappears at 6,000 MWd/tU burnup, while for the same burnup, gadolinium oxide with a concentration of 8% maintains a value around 600 pcm (1 pcm is the reactivity value, ΔK/K, multiplied by 10⁵), which represents over 70% of its value at the beginning of the cycle (BOC). The behaviour described, almost independent of the distribution of gadolinium oxide in the core, is well known and lies at the base of all applications of gadolinium oxide in pressurised water reactors that use low-concentration gadolinium oxide to decrease the boron at BOC and high-concentration gadolinium oxide to control the power distribution throughout the cycle.

Known applications include gadolinium oxide in all or some of the fuel pellets of some (or, possibly, in some cases all) fuel rods of some or all fuel assemblies. As mentioned, gadolinium oxide is incorporated together with the fuel (such as uranium oxide, UO₂) and possibly, in some cases, together with other elements. In known applications, low-concentration gadolinium oxide pellets have a gadolinium oxide content from 0.5% to 2% by weight of Gd₂O₃ (with respect to the total pellet weight), preferably 1%. However, high-concentration gadolinium oxide pellets have a concentration of Gd₂O₃ from 6% to 10% by weight. The described use of these two types of pellets/concentrations of gadolinium oxide has shown to suffice for controlling the power distribution and maintain acceptably low boron concentrations at the BOC for 18-month cycles. However, the applicant has conducted studies that show that the combination of these two types of fuel pellets/concentrations does not give optimum results. In fact, the combination of only these two types of combustible poison pellets can even be insufficient for longer cycles, such as of 24 months, and/or in the case of possible increases in the rated power of the nuclear stations.

Therefore, it is considered that there is a need to improve the manner in which combustible poisons are incorporated in fuel assemblies for pressurised water reactors. Specifically, it is considered desirable to improve the incorporation of gadolinium oxide to improve the performance of current designs in medium or long cycles (around 18 months), to obtain an incorporation of gadolinium oxide that is also adequate for longer cycles (such as cycles of 24 months and longer) and/or with a greater power level.

EP-A-1521271 describes fuel assemblies for pressurised water reactors that comprise a plurality of nuclear fuel rods, some of which have a first content in gadolinium oxide mass while others have a second content, higher than the first content. It specifies that the first content is always greater than 2%, preferably from 4% to 6%. Aside from the fact that EP-A-1521271 does not specify how the gadolinium oxide content is distributed in the rods (for example, whether the percentage of gadolinium oxide of a rod is obtained by mixing pellets with a high concentration of gadolinium oxide with others having a low concentration of gadolinium oxide, to obtain a given average concentration), it is considered that many of the configurations described in EP-A-1521271 would not be technologically viable, and even if they were, including those indicated as preferred, many would not lead to the advantages described.

### DESCRIPTION OF THE INVENTION

A first aspect of the invention relates to a fuel assembly for pressurised water reactors, which can be of the type comprising a frame defining a grid or matrix of positions, that can be of two types: on one hand, positions in which nuclear fuel rods are housed, and on the other positions for receiving external control rods used, among other things, to control the fission process and stop it in case of an emergency, by introducing the external control rods fully into the core. The grid or matrix can have NxN positions, where N is equal to or greater than 14, for example, 15, 16, 17, 18 or more. Of these positions, only a small part generally correspond to external control rods (for example, in a matrix with 17x17 positions, typically 24 correspond to external control rods, one (the central position) is for the instrumentation tube and the remaining rods (264) can correspond to the nuclear fuel, with or without an integrated poison).

The fuel assembly comprises a plurality of nuclear fuel rods, each one comprising a plurality of pellets with nuclear fuel (such as UO₂, for example, enriched in U-235). At least some of said pellets in at least some of said nuclear fuel rods comprise high-concentration gadolinium oxide (Gd₂O₃), said high concentration being a concentration of gadolinium oxide equal to or greater than 6% by weight with respect to the weight of the pellet (the remaining weight can correspond to the nuclear fuel, optionally completed with other elements).

According to the invention, at least some of said pellets in at least some of said rods comprise medium-concentration gadolinium oxide, said medium concentration being a gadolinium oxide concentration greater than 2% by weight and less than or equal to 4% by weight with respect to the weight of the pellet (the remaining weight can correspond to the nuclear fuel, optionally completed with other elements).

This incorporation of medium-concentration gadolinium oxide provides a number of important advantages:
- Increased capacity to reduce the boron concentration at BOC, necessary or convenient for longer cycles, particularly for cycles longer than 18 months;
- Improved evolution of the boron curve in the first part of the cycle, particularly in the first third of the cycle, without significant peaks associated to the disappearance of the low-concentration gadolinium oxide;
- Improved control of the power distribution and the power peak factors.

This is applicable to both full length poisons (this is, the cases in which all pellets of the rod include poison) and partial length pellets (in which only a part, such as under 75%, under 50% or under 25%, of the rod pellets include the poison). The invention is directly compatible with existing designs of fuel assemblies and can also be used with other poisons.

In addition, used in combination with a model for the thermal conductivity of the gadolinium oxide pellet adjusted with the latest experimental data, the invention allows obtaining important advantages without greatly penalising the cycle duration.

According to one possible form of the invention, in the fuel assembly a limited number of rods use gadolinium oxide as a neutron poison, with two or more concentrations of gadolinium oxide in the same assembly.

In a possible form of the invention, an amount from 2 (absolute figure, not a %) to 12% of all nuclear fuel rods can comprise high-concentration gadolinium oxide pellets, and an amount from 2 (absolute figure, not a %) to 15% of all nuclear fuel rods can comprise medium-concentration gadolinium oxide pellets. In other words, the fuel assembly can comprise a total number of nuclear fuel rods T, a number A of which comprise high-concentration gadolinium oxide pellets and a number B of which comprise medium-concentration gadolinium oxide pellets, where 2 ≤ A ≤ 12% of T and 2 ≤ B ≤ 15% of T. This is, in the case of a fuel assembly with a 17x17 configuration having 264 nuclear fuel rods, at least 2 of said rods and at most 31 of said rods (i.e. a number of rods equal to or greater than 2 and equal to or less than 12% of 264; although in practice 28, or maybe 32, would be used instead of 31, except in asymmetrical assemblies, as symmetry reasons may favour a multiple of 4) can comprise high-concentration gadolinium oxide pellets, while at least 2 rods and at most 39 rods (i.e. a number of rods equal to or greater than 2 and equal to or less than 15% of 264 or, in practice, to use a number of rods that is a multiple of 4, 36 or maybe 40 rods) can comprise medium-concentration gadolinium oxide pellets.

For example, A and B can be selected such that 2 ≤ A ≤ 8% of T, 2 ≤ B ≤ 10% of T.

In nuclear fuel rods that do not comprise gadolinium oxide pellets, the pellets can have a first degree of U-235 enrichment. On another hand, in nuclear fuel rods comprising pellets comprising gadolinium oxide, the pellets comprising medium-concentration gadolinium oxide can additionally comprise nuclear fuel with a second degree of U-235 enrichment substantially identical to the first degree of U-235 enrichment (as a gadolinium oxide content less than or equal to 4% by weight implies that the thermal properties of the pellet will not be as worsened as in the case of high-concentration gadolinium oxide pellets, so that it is not necessary to reduce the reactivity by using a lower enrichment than in the fuel without gadolinium oxide), and the pellets comprising high-concentration gadolinium oxide can additionally comprise nuclear fuel with a third degree of U-235 enrichment, substantially lower than the first degree of U-235 enrichment (as the high content of gadolinium oxide implies that the thermal properties of the pellet will be substantially worsened, so that it is necessary to reduce the reactivity of these pellets in relation to those that do not include poison).

The average gadolinium oxide concentration can be greater than 2.5% by weight and less than 3.5% by weight (for example, a concentration of 3% by weight) with respect to the weight of the pellet.

It is possible that in at least some of the nuclear fuel rods comprising pellets with medium-concentration gadolinium oxide all pellets comprise medium-concentration gadolinium oxide.

It is also possible that in at least some of the nuclear fuel rods comprising pellets with medium-concentration gadolinium oxide only some pellets comprise medium-concentration gadolinium oxide.

It is possible that in at least some of the nuclear fuel rods comprising pellets with high-concentration gadolinium oxide, all pellets comprise high-concentration gadolinium oxide.

It is also possible that in at least some of the nuclear fuel rods comprising pellets with high-concentration gadolinium oxide only some pellets comprise high-concentration gadolinium oxide.

An average expert in the field may use the most convenient option in each case, for example according to the type of core, cycle duration, reloading scheme, etc.

An additional number, such as from 2 (rods) to 15% (or from 2 (rods) to 10%) of the total number of fuel rods can include pellets comprising low-concentration gadolinium oxide, said low concentration being a concentration greater than or equal to 0.5% by weight and less than or equal to 2% by weight. Or, in other words, the fuel assembly can comprise a total number of nuclear fuel rods T, a number C of which comprise low-concentration gadolinium oxide pellets, where 2 ≤ C ≤ 15% of T (for example, 2 ≤C ≤ 10% of T). This additional use of low-concentration gadolinium oxide can allow adjusting the concentration of soluble boron at the BOC.

As stated above, in nuclear fuel rods that do not comprise pellets with gadolinium oxide, the pellets can have a first degree of U-235 enrichment. Pellets comprising low-concentration gadolinium oxide can additionally comprise nuclear fuel with a fourth degree of U-235 enrichment substantially identical to the first degree of U-235 enrichment (as a low gadolinium oxide content means that the thermal properties of the pellet will not be as worsened as much as in the case of high-concentration gadolinium oxide pellets, so that it is not necessary to reduce the reactivity by using a lower enrichment than in the fuel without gadolinium oxide).

At least in some cases, it may be preferable for the nuclear fuel rods with pellets comprising gadolinium oxide not to be in the outer rows of the fuel assembly.

As stated above, the fuel assembly can comprise a plurality of positions (guide tubes) to allow inserting the control rods. The nuclear fuel rods comprising gadolinium oxide pellets that are loaded in the inner rows of the fuel assembly are preferably placed in positions adjacent to the guide tubes. To minimise neutron interaction between the gadolinium oxide and the control rods, diagonally adjacent positions are preferable to those laterally adjacent with the guide tube.

To avoid neutron shielding of the intra-nuclear detector which in some designs is introduced through the central instrumentation tube, preferably no rods with gadolinium oxide will be placed in the positions adjacent to the instrumentation tube.

Nuclear fuel rods comprising pellets with gadolinium oxide can be distributed symmetrically, with rotational symmetry of order four in the fuel assembly, although they can also be distributed asymmetrically in the assembly, albeit with the purpose of placing the assemblies in the reactor core so that the core itself has a symmetrical configuration of fuel rods with gadolinium oxide.

Another aspect of the invention relates to a method for loading fuel assemblies in the core of a nuclear reactor. The method comprises the step of placing a plurality of fuel assemblies in said core, at least some of said fuel assemblies being in accordance with the invention as it is described above. Some of the assemblies can have an asymmetrical arrangement of the rods containing pellets with gadolinium oxide. In this case the nuclear reactor core is loaded such that in said core the rods comprising gadolinium oxide pellets are distributed symmetrically.

### DESCRIPTION OF THE DRAWINGS

To complete the description and aid a better understanding of the characteristics of the invention, particularly according to a preferred example of embodiment thereof, a set of drawings is accompanied forming an integral part of the description where, for purposes of illustration and in a non-limiting sense, the following is shown:
Figure 1 shows the evolution with burnup of the effect on the fuel assembly reactivity of the presence of a rod of gadolinium oxide for concentrations of 1% and 8% by weight.
Figure 2 is the same as figure 1, although it additionally incorporates a curve for medium-concentration gadolinium oxide (in this case 3% by weight).
Figure 3 shows an example of the arrangement of rods with gadolinium oxide according to a preferred embodiment of the invention.
Figures 4-8 show diagrams illustrating the variation of several parameters throughout the process.
Figures 9 and 10 show, respectively, the axial power offset and the axial power distribution in the core for two concentrations of gadolinium oxide.

### EXAMPLES AND PREFERRED EMBODIMENT OF THE INVENTION

A fuel assembly design is presented below in accordance with a possible embodiment of the invention, comparing its results with those for an equivalent current design, including a comparison of the Li concentrations in the primary (in the coolant) corresponding to each design.

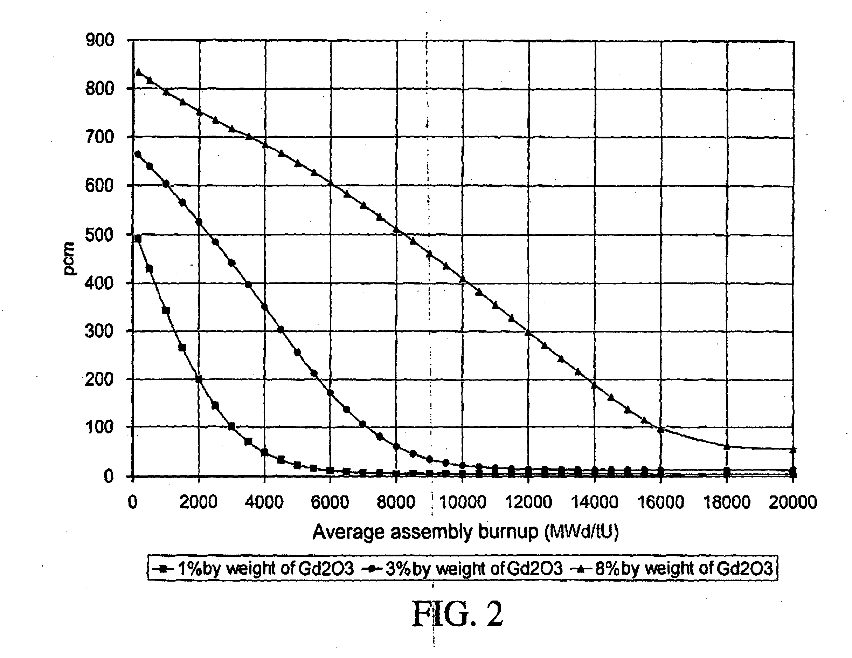

Firstly, figure 2 (vertical axis: effect on fuel assembly reactivity (pcm) for gadolinium oxide rod; horizontal axis: average assembly burnup in MWd/tU), based on figure 1, also shows the evolution on the effect on fuel assembly reactivity of a rod comprising pellets with a gadolinium oxide concentration of 3% by weight, allowing to compare this evolution with that of cases with pellets of concentrations 1% and 8%. As can be seen, gadolinium oxide at 3% concentration shows an intermediate evolution with burnup between that for low and high concentrations currently used in fuel assemblies, and it is understood to be best suited for use in long cycles, in which low-concentration gadolinium oxide burns too quickly, which requires loading an unnecessarily high number of high-concentration gadolinium oxide rods to limit the need to raise the boron concentration when the low-concentration gadolinium oxide is exhausted, while efficiently controlling power peaks in the intermediate part of the cycle. Loading an unnecessarily high number of high-concentration gadolinium oxide rods has two negative effects that penalise the neutron efficiency of the design. In the first place, it reduces the UO₂ load in the core with the resulting shortening of the cycle. In the second place, it increases the residual penalisation at the end of the cycle due to parasitic absorption in the even isotopes of gadolinium.

In addition to the aforementioned limitations, an excessively quick burnup of low-concentration gadolinium oxide (≤ 2% by weight) causes, in current low-leak designs, a marked radial offset of the power towards the interior of the core in the first part of the cycle (coinciding with the exhaustion of the low-concentration gadolinium oxide) which reduces the signal arriving at excore detectors, thereby requiring to recalibrate them more often than in other designs. The use of medium-concentration gadolinium oxide, since it disappears more slowly than low-concentration gadolinium oxide, allows a better control of the power distribution and, in low-leak schemes, limits the power offset to the core interior reducing the number of calibrations of excore detectors required during the cycle.

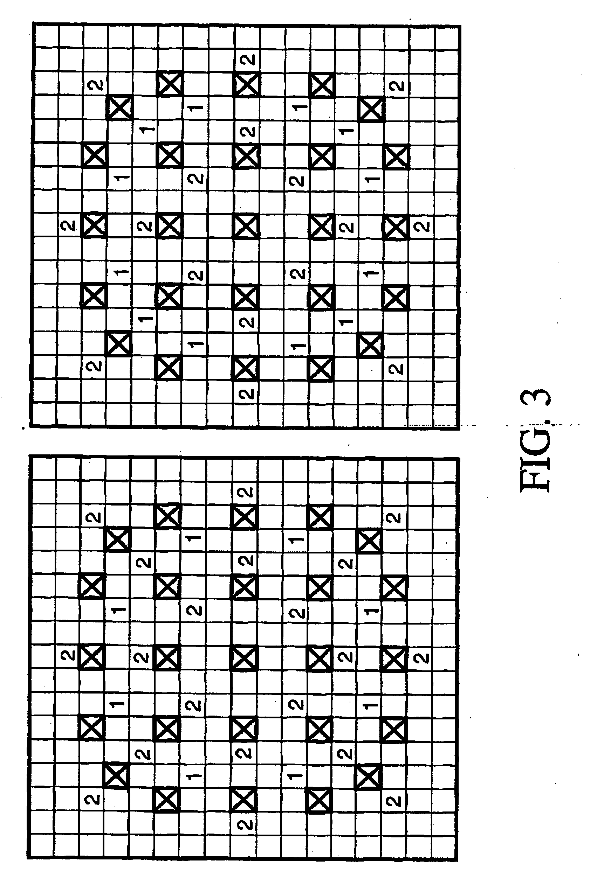

Figure 3 shows two possible distributions, according to this invention, for the fuel rods in a 17x17 matrix (equivalent designs are possible for other fuel matrix designs, such as 14x14, 15x15, 16x16 or greater). Empty squares represent positions occupied by fuel rods without pellets having gadolinium oxide, while "1" represents positions occupied by fuel rods with high-concentration gadolinium oxide pellets, "2" represents positions occupied by fuel rods with medium-concentration gadolinium oxide pellets, and "X" represents positions corresponding to guide tubes for control rods (the centre position corresponds to the instrumentation tube). The two examples correspond to designs in which the gadolinium-free rods have a U-235 enrichment of 4.70%. Rods with medium-concentration gadolinium oxide (3% in the examples) have the same enrichment as rods without gadolinium oxide (4.70%), while rods with high-concentration gadolinium oxide, due to the lower thermal conductivity of these pellets, have a lower enrichment (2,80% of U-235 in the examples). Naturally, there are many other possible distributions of the rods, so that an average expert in the field can optimise the distribution in each case according to the characteristics of the reactor, cycle, logistical issues, etc. For example, it can additionally incorporate rods with low-concentration gadolinium oxide pellets.

The following figures show different comparisons between a current design for an 18-month cycle and low leaks using gadolinium oxide concentrations of 2% and 8% by weight, and another using an optimised design in which the rods with 2% by weight gadolinium oxide of the previous design have been replaced with other rods having 3% by weight gadolinium oxide. The remaining characteristics of the current design (with 2% gadolinium oxide) such as the positions and burnups of the assemblies at BOC, enrichments, positions of the rods with gadolinium oxide in the fresh fuel assemblies, etc. have been maintained in the optimised design (which uses 3% by weight gadolinium oxide) in order not to invalidate the comparison.

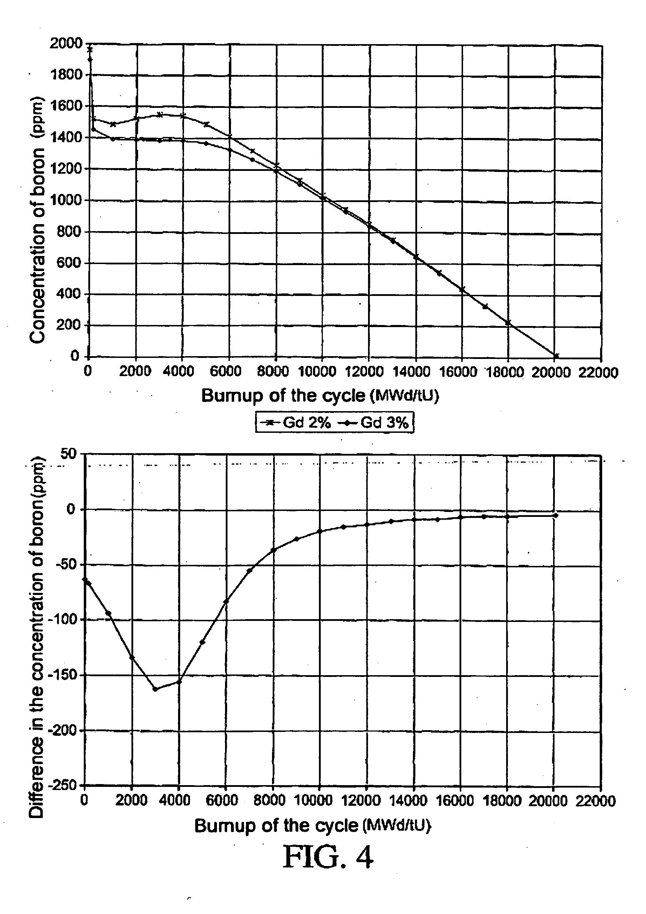

Figure 4 shows, in the top diagram, the evolution of the concentration of boron dissolved in the coolant for a typical 18-month cycle with a low-leak scheme (in the case of full power, equilibrium xenon and no control rods in the core). Figure 4 compares the boron curve of a scheme using a current design with 2% and 8% by weight gadolinium oxide pellets (Gd2%), and the same curve (Gd3%) for the optimised design described above, which uses pellets with 3% and 8% by weight gadolinium oxide pellets (Gd2% and Gd3% have the same meaning in the remaining figures). As can be seen in the second diagram of figure 4, which shows the difference between the two curves of the first diagram of figure 4, the use of the invention allows reducing the boron concentration by 70 ppm at 150 MWd/tU and even by 170 ppm at 3,000 MWd/tU, without shortening the cycle.

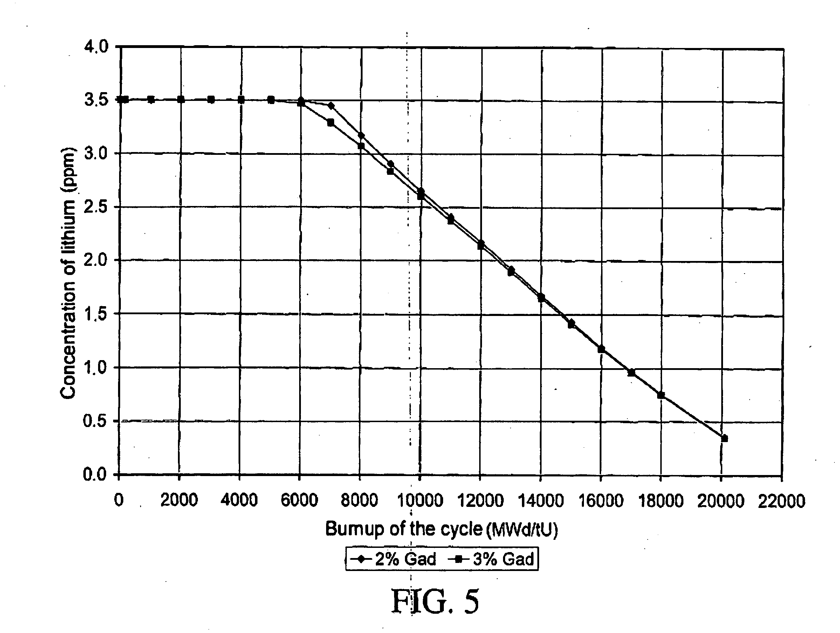

This change in the boron behaviour is a substantial improvement. Primary chemistry programs currently recommended by the industry are characterised by a high pH (≥ 7.1 measured at the average vessel temperature) constant throughout the entire operation at full power. Depending on boron concentration, the chemistry program recommended by the industry can lead to having to operate with high Li concentrations for an extended period at the beginning of the cycle, which based on current experience may accelerate the corrosion of the fuel sheath material. For this reason and other reasons related to the primary materials, it is recommended not to operate with over 3.5 ppm of Li, as well as limiting the time of operation at the maximum Li concentration. The invention allows a greater reduction of the boron concentration than in current designs, allowing operation with a constant pH ≥ 7.1 with lower Li concentrations. As shown in figure 5 (which compares the evolution of Li concentration in the primary for the two aforementioned cases, for full power, equilibrium xenon and no control rods in the core) the use of the invention (with pellets having a concentration of 3% by weight of gadolinium oxide instead of pellets with a concentration of 2% by weight of gadolinium oxide) allows reducing the time of exposure to high Li concentrations by up to 15%, reducing the negative impact of this material on the sheath. The figure shows that with gadolinium at 2%, the reactor operates with 3.5 ppm Li until a burnup of approximately 7000 MWd/tU, while with a design of concentration 3% it only does so until about 6000 MWd/tU, representing a reduction of approximately 15%. In addition, as the boron peak between burnups of 1,000 MWd/tU and 3,000 MWd/tU approximately disappears, it is possible to operate the reactor without having to add boron after the cycle start-up, which considerably simplifies the operation.

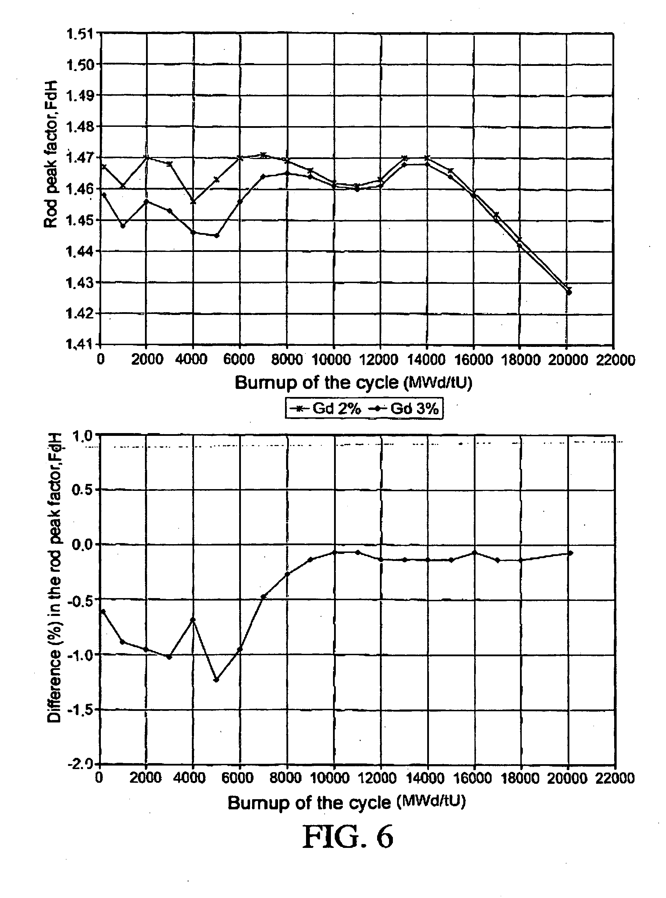

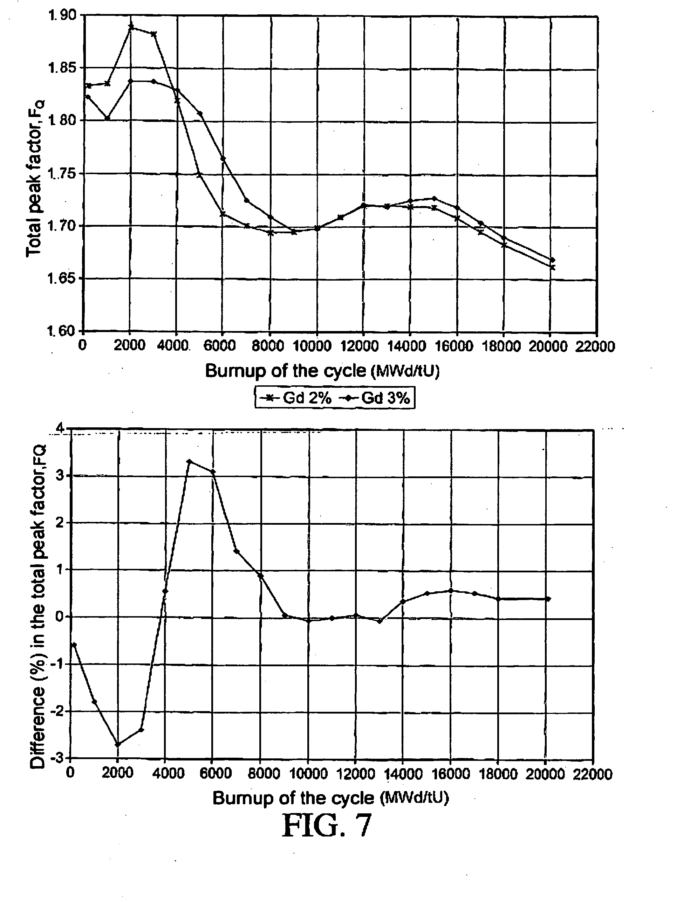

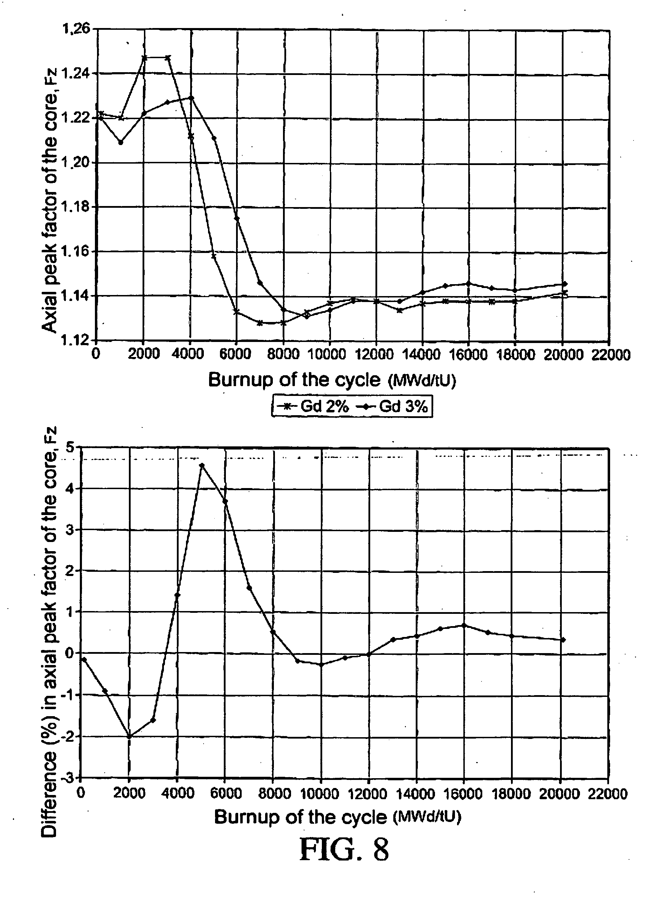

Figures 6 to 8 compare, at full power conditions, equilibrium xenon and all control rods extracted, various power peak factors for a standard design (Gd2%) and another design with optimised fuel (Gd3%). Peak factors represent the relationship between a maximum value and the average value of a magnitude. Lower power peak factors indicate more uniform power distributions in the reactor core, which is convenient to prevent the presence of hot spots in the reactor. The comparison presented shows that the use of an optimised design such as that proposed improves the control of power peak factors during the cycle. With the improved design, peak factors are lower for burnups where they are limiting and, in some cases only, are somewhat higher than those of the standard design for burnups away from the cycle maximum value, in which there is a great margin.

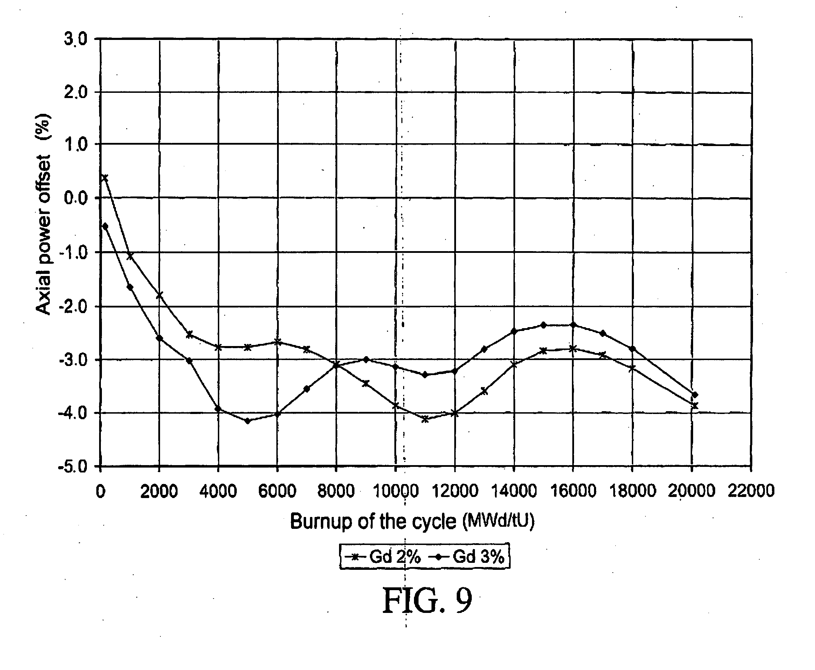

Figure 9 shows the axial power offset of the core at full power, equilibrium xenon and all control rods extracted for the two designs object of this comparison. The axial offset measures the difference between the power generated in the top half of the core and that generated in the bottom half of the core.

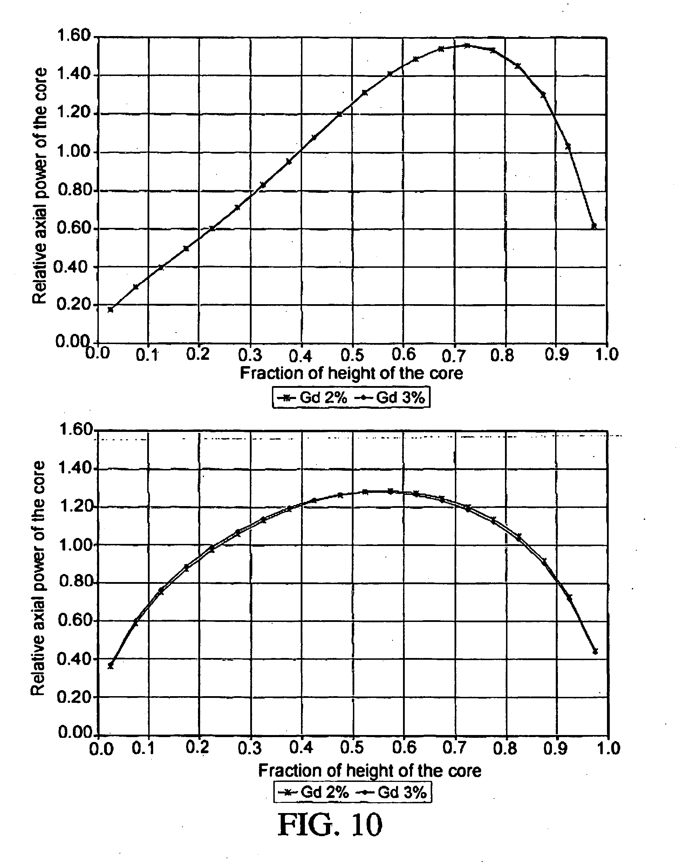

Figure 10 shows for the two designs object of this comparison the axial offset in the core at the beginning of the cycle for two different conditions. The first diagram of figure 10 corresponds to the case of BOC, zero power, no xenon and all control rods extracted. The second diagram shows the same parameter for the case of BOC, full power, equilibrium xenon and all control rods extracted.

Figures 9 and 10 show that the use of medium-concentration gadolinium oxide object of this invention does not change appreciably the power distributions in the core, indicating that, aside from the improvements identified in the peak factors and the boron curve, the use of medium-concentration gadolinium does not cause important changes in any other core parameters, such as control rod values, reactivity coefficients, etc. that may represent a disadvantage compared to current designs.

In this text, the term "comprises" and its variations (such as "comprising", etc.) must not be understood in an exclusive manner, this is, it does not exclude the possibility that what is being described includes other elements, steps etc.

In addition, the invention is not limited to the specific embodiments described herein but also encompasses, for example, variations that can be made by an average expert in the field (such as regarding the choice of materials, dimensions, components, configuration etc.) within the scope of the claims.

## Claims

1. Fuel assembly for pressurised water nuclear reactors, comprising a plurality of nuclear fuel rods each one of which comprises a plurality of pellets with nuclear fuel, at least some of said pellets in at least some of said nuclear fuel rods comprising high-concentration gadolinium oxide, said high concentration being a concentration of gadolinium oxide greater than or equal to 6% by weight with respect to the weight of the pellet;
**characterised in that** at least some of said pellets, in at least some of said rods, comprise medium-concentration gadolinium oxide, said medium concentration being a concentration of gadolinium oxide greater than 2% by weight and less than or equal to 4% by weight with respect to the weight of the pellet.

2. Fuel assembly according to claim 1, **characterised in that** the fuel assembly comprises a total number T of nuclear fuel rods, a number A of said nuclear fuel rods comprising high-concentration gadolinium oxide pellets and a number B of said nuclear fuel rods comprising medium concentration gadolinium oxide pellets, where
2 ≤ A ≤ 12% of T and
2 ≤ B ≤ 15% of T.

3. Fuel assembly according to claim 2, **characterised in that**
2 ≤ A ≤8% of T,
2 ≤ B ≤10% of T.

4. Fuel assembly according to any of the preceding claims, **characterised in that**
in the nuclear fuel rods that do not comprise pellets comprising gadolinium oxide, the pellets have a first degree of U-235 enrichment,
and **in that**
in the nuclear fuel rods that comprise pellets comprising gadolinium oxide, - the pellets comprising medium-concentration gadolinium oxide additionally comprise nuclear fuel with a second degree of U-235 enrichment substantially identical to the first degree of U-235 enrichment, and
- the pellets comprising high-concentration gadolinium oxide additionally comprise nuclear fuel with a third degree of U-235 enrichment substantially lower than the first degree of U-235 enrichment.

5. Fuel assembly according to any of the preceding claims, **characterised in that** said medium concentration of gadolinium oxide is a gadolinium oxide concentration greater than 2.5% by weight and less than 3.5% by weight, with respect to the weight of the pellet.

6. Fuel assembly according to any of the preceding claims, **characterised in that** in at least some of the nuclear fuel rods comprising pellets that comprise medium-concentration gadolinium oxide, all pellets comprise medium-concentration gadolinium oxide.

7. Fuel assembly according to any of the preceding claims, **characterised in that** in at least some of the nuclear fuel rods comprising pellets that comprise medium-concentration gadolinium oxide, only some of the pellets comprise medium-concentration gadolinium oxide.

8. Fuel assembly according to any of the preceding claims, **characterised in that** in at least some of the nuclear fuel rods comprising pellets that comprise high-concentration gadolinium oxide, all pellets comprise high-concentration gadolinium oxide.

9. Fuel assembly according to any of the preceding claims, **characterised in that** in at least some of the nuclear fuel rods comprising pellets that comprise high-concentration gadolinium oxide, only some of the pellets comprise high-concentration gadolinium oxide.

10. Fuel assembly according to any of the preceding claims, **characterised in that** a plurality of the nuclear fuel rods include pellets comprising low-concentration gadolinium oxide, said low concentration being a concentration greater than or equal to 0.5% by weight and less than or equal to 2% by weight.

11. Fuel assembly according to claim 10, **characterised in that** the fuel assembly comprises a total number T of nuclear fuel rods, a number C of said nuclear fuel rods comprising low-concentration gadolinium oxide pellets, where 2 ≤ C ≤ 15% of T.

12. Fuel assembly according to claim 11, **characterised in that** 2 ≤ C ≤ 10% of T.

13. Fuel assembly according to any of claims 10-12, **characterised in that** in the nuclear fuel rods that do not comprise pellets comprising gadolinium oxide, the pellets have a first degree of U-235 enrichment, the pellets comprising low-concentration gadolinium oxide additionally comprising nuclear fuel with a fourth degree of U-235 enrichment substantially identical to the first degree of U-235 enrichment.

14. Fuel assembly according to any of the preceding claims, **characterised in that** the nuclear fuel rods that comprise pellets comprising gadolinium oxide are not in the outer rows of the fuel assembly.

15. Fuel assembly according to any of the preceding claims, **characterised in that** the fuel element comprises a plurality of external control rod positions, to allow inserting said external control rods in the assembly, the nuclear fuel rods comprising gadolinium oxide pellets being placed in positions adjacent to said external control rod positions.

16. Fuel assembly according to claim 15, **characterised in that** the nuclear fuel rods comprising pellets with gadolinium oxide are placed in positions diagonally adjacent to those of the control rod positions.

17. Fuel assembly according to any of the preceding claims; **characterised in that** it comprises a frame that defines a positions matrix, said positions comprising positions in which nuclear fuel rods are housed and positions for receiving external control rods, said positions matrix comprising NxN positions, where N ≥ 14.

18. Fuel assembly according to claim 17, where N ≥ 17.

19. Fuel assembly according to any of the preceding claims, **characterised in that** the nuclear fuel rods comprising gadolinium oxide pellets are distributed with rotational symmetry of order four in the fuel assembly.

20. Fuel assembly according to any of claims 1-18, **characterised in that** the nuclear fuel rods comprising gadolinium oxide pellets are not distributed symmetrically in the fuel assembly.

21. Method for loading fuel assemblies in the core of a nuclear reactor, comprising the step of placing a plurality of fuel assemblies in said core, **characterised in that** at least some of said assemblies are fuel assemblies according to any of the preceding claims.

22. Method according to claim 21, **characterised in that** at least some of said assemblies are fuel assemblies according to claim 20, with an asymmetrical distribution in the assembly of the rods that comprise pellets with gadolinium oxide, the loading of the nuclear reactor core being carried out in such a way that in said core, the rods comprising gadolinium oxide pellets have a symmetrical arrangement.

## Patentansprüche

1. Brennstoffbaugruppe für nukleare Druckwasserreaktoren, umfassend mehrere Kernbrennstoffstäbe, die jeder mehrere Pellets mit Kernbrennstoff umfassen, wobei zumindest einige der Pellets in zumindest einigen der Kernbrennstoffstäbe hochkonzentriertes Gadoliniumoxid umfassen, wobei die hohe Konzentration eine Gadoliniumoxidkonzentration von größer oder gleich 6 Gew.-% bezüglich des Gewichts des Pellets ist;
**dadurch gekennzeichnet, dass** zumindest einige der Pellets in zumindest einigen der Stäbe mittelstark konzentriertes Gadoliniumoxid umfassen, wobei die mittelstarke Konzentration eine Gadoliniumoxidkonzentration von größer 2 Gew.-% und kleiner oder gleich 4 Gew.-% bezüglich des Gewichts des Pellets ist.

2. Brennstoffbaugruppe nach Anspruch 1, **dadurch gekennzeichnet, dass** die Brennstoffbaugruppe eine Gesamtanzahl T von Kernbrennstoffstäben umfasst, wobei eine Anzahl A der Kernbrennstoffstäbe Gadoliniumoxidpellets in hoher Konzentration umfasst und eine Anzahl B der Kernbrennstoffstäbe Gadoliniumoxidpellets in mittelstarker Konzentration umfasst, wobei
2 ≤ A ≤ 12% von T und
2 ≤ B ≤ 15% von T ist.

3. Brennstoffbaugruppe nach Anspruch 2, **dadurch gekennzeichnet, dass**
2 ≤ A ≤ 8% von T und
2 ≤ B ≤ 10% von T ist.

4. Brennstoffbaugruppe nach einem der vorhergehenden Ansprüche, **dadurch gekennzeichnet, dass**
in den Kernbrennstoffstäben, die keine Pellets mit Gadoliniumoxid umfassen, die Pellets einen ersten Grad von U-235-Anreicherung aufweisen,
und dass
in den Kernbrennstoffstäben, die Pellets mit Gadoliniumoxid umfassen,
- die Pellets mit mittelstark konzentriertem Gadoliniumoxid zusätzlich Kernbrennstoff mit einem zweiten Grad von U-235-Anreicherung umfassen, der im Wesentlichen mit dem ersten Grad von U-235-Anreicherung identisch ist, und
- die Pellets mit hochkonzentriertem Gadoliniumoxid zusätzlich Kernbrennstoff mit einem dritten Grad von U-235-Anreicherung umfassen, der im Wesentlichen unter dem ersten Grad von U-235-Anreicherung liegt.

5. Brennstoffbaugruppe nach einem der vorhergehenden Ansprüche, **dadurch gekennzeichnet, dass** die mittelstarke Gadoliniumoxidkonzentration eine Gadoliniumoxidkonzentration von größer 2,5 Gew.-% und kleiner 3,5 Gew.-% bezüglich des Gewichts der Pellets ist.

6. Brennstoffbaugruppe nach einem der vorhergehenden Ansprüche, **dadurch gekennzeichnet, dass** in zumindest einigen der Kernbrennstoffstäbe, die Pellets umfassen, welche mittelstark konzentriertes Gadoliniumoxid umfassen, alle Pellets mittelstark konzentriertes Gadoliniumoxid umfassen.

7. Brennstoffbaugruppe nach einem der vorhergehenden Ansprüche, **dadurch gekennzeichnet, dass** in zumindest einigen der Kernbrennstoffstäbe, die Pellets umfassen, welche mittelstark konzentriertes Gadoliniumoxid umfassen, nur einige der Pellets mittelstark konzentriertes Gadoliniumoxid umfassen.

8. Brennstoffbaugruppe nach einem der vorhergehenden Ansprüche, **dadurch gekennzeichnet, dass** in zumindest einigen der Kernbrennstoffstäbe, die Pellets umfassen, welche hochkonzentriertes Gadoliniumoxid umfassen, alle Pellets hochkonzentriertes Gadoliniumoxid umfassen.

9. Brennstoffbaugruppe nach einem der vorhergehenden Ansprüche, **dadurch gekennzeichnet, dass** in zumindest einigen der Kernbrennstoffstäbe, die Pellets umfassen, welche hochkonzentriertes Gadoliniumoxid umfassen, nur einige Pellets hochkonzentriertes Gadoliniumoxid umfassen.

10. Brennstoffbaugruppe nach einem der vorhergehenden Ansprüche, **dadurch gekennzeichnet, dass** mehrere der Kernbrennstoffstäbe Pellets enthalten, die schwachkonzentriertes Gadoliniumoxid umfassen, wobei die schwache Konzentration eine Konzentration von größer oder gleich 0,5 Gew.-% und kleiner oder gleich 2 Gew.-% ist.

11. Brennstoffbaugruppe nach Anspruch 10, **dadurch gekennzeichnet, dass** die Brennstoffbaugruppe eine Gesamtanzahl T von Kernbrennstoffstäben umfasst, wobei eine Anzahl C der Kernbrennstoffstäbe Gadoliniumoxidpellets in schwacher Konzentration umfasst, wobei 2 ≤ C ≤ 15% von T ist.

12. Brennstoffbaugruppe nach Anspruch 11, **dadurch gekennzeichnet, dass** 2 ≤ C ≤ 10% von T ist.

13. Brennstoffbaugruppe nach einem der Ansprüche 10 bis 12,
**dadurch gekennzeichnet, dass** in den Kernbrennstoffstäben, die keine Pellets mit Gadoliniumoxid umfassen, die Pellets einen ersten Grad von U-235-Anreicherung aufweisen, wobei die Pellets mit schwachkonzentriertem Gadoliniumoxid zusätzlich Kernbrennstoff mit einem vierten Grad von U-235-Anreicherung umfassen, der im Wesentlichen mit dem ersten Grad von U-235-Anreicherung identisch ist.

14. Brennstoffbaugruppe nach einem der vorhergehenden Ansprüche, **dadurch gekennzeichnet, dass** die Kernbrennstoffstäbe, die Pellets mit Gadoliniumoxid umfassen, nicht in den äußeren Reihen der Brennstoffbaugruppe angeordnet sind.

15. Brennstoffbaugruppe nach einem der vorhergehenden Ansprüche, **dadurch gekennzeichnet, dass** das Brennstoffelement mehrere externe Steuerstabpositionen umfasst, um das Einfügen externer Steuerstäbe in die Baugruppe zu ermöglichen, wobei die Kernbrennstoffstäbe mit Gadoliniumoxidpellets in Positionen benachbart zu den externen Steuerstabpositionen angeordnet sind.

16. Brennstoffbaugruppe nach Anspruch 15, **dadurch gekennzeichnet, dass** die Gadoliniumoxid umfassenden Kernbrennstoffstäbe in diagonal benachbarten Positionen zu denen der Steuerstabpositionen angeordnet sind.

17. Brennstoffbaugruppe nach einem der vorhergehenden Ansprüche, **dadurch gekennzeichnet, dass** sie einen Rahmen umfasst, der eine Positionsmatrix definiert, wobei die Positionen solche Positionen, in denen Kernbrennstoffstäbe untergebracht sind, und Positionen zum Aufnehmen externer Steuerstäbe umfassen, wobei die Positionsmatrix N x N Positionen umfasst, wobei N ≥ 14 ist.

18. Brennstoffbaugruppe nach Anspruch 17, wobei N ≥ 17 ist.

19. Brennstoffbaugruppe nach einem der vorhergehenden Ansprüche, **dadurch gekennzeichnet, dass** die Kernbrennstoffstäbe, die Gadoliniumoxidpellets umfassen, mit Rotationssymmetrie der vierten Ordnung in der Brennstoffbaugruppe verteilt sind.

20. Brennstoffbaugruppe nach einem der Ansprüche 1 bis 18,
**dadurch gekennzeichnet, dass** die Kernbrennstoffstäbe, die Gadoliniumoxidpellets umfassen, nicht symmetrisch in der Brennstoffbaugruppe verteilt sind.

21. Verfahren zum Laden von Brennstoffbaugruppen in den Kern eines Atomreaktors, umfassend den Schritt des Anordnens von mehreren Brennstoffbaugruppen in dem Kern, **dadurch gekennzeichnet, dass** zumindest einige der Baugruppen Brennstoffbaugruppen gemäß einem der vorhergehenden Ansprüche sind.

22. Verfahren nach Anspruch 21, **dadurch gekennzeichnet, dass** zumindest einige der Baugruppen Brennstoffbaugruppen gemäß Anspruch 20 mit einer asymmetrischen Verteilung der Pellets mit Gadoliniumoxid der umfassenden Stäbe in der Baugruppe sind, wobei das Laden des Atomreaktorkerns derart ausgeführt wird, dass die Stäbe mit Gadoliniumoxidpellets eine symmetrische Anordnung in dem Kern aufweisen.

## Revendications

1. Ensemble combustible pour des réacteurs nucléaires à eau sous pression comportant un ensemble de barres de combustible nucléaire, chaque barre étant formée d'un ensemble de pastilles de combustible nucléaire, au moins certaines des pastilles dans au moins certaines des barres de combustible ayant une concentration élevée en oxyde de gadolinium supérieure ou égale à 6 % en poids par rapport au poids de la pastille,
**caractérisé en ce qu'**
au moins certaines des pastilles dans au moins certaines des barres ont une concentration moyenne en oxyde de gadolinium supérieure à 2 % en poids et inférieure ou égale à 4 % en poids par rapport au poids de la pastille.

2. Ensemble combustible selon la revendication 1,
**caractérisé en ce qu'**
il comporte un nombre total T de barres de combustible nucléaire, dont un nombre A de barres comporte une forte concentration en pastilles d'oxyde de gadolinium et dont un nombre B de barres à une concentration moyenne en pastilles d'oxyde de gadolinium, telle que :
2 ≤ A ≤ 12 % de T, et
2 ≤ B ≤ 15 % de T.

3. Ensemble combustible selon la revendication 2,
**caractérisé en ce qu'**
on a:
2 ≤ A ≤ 8 % de T,
2 ≤ B ≤ 10 % de T.

4. Ensemble combustible selon les revendications précédentes,
**caractérisé en ce que**
dans les barres de combustible nucléaire qui ne contiennent pas de pastilles avec de l'oxyde de gadolinium, les pastilles ont un premier degré d'enrichissement d'uranium U-235, et
dans les barres de combustible nucléaire avec des pastilles contenant de l'oxyde de gadolinium, les pastilles ont une concentration moyenne d'oxyde de gadolinium avec en plus du combustible nucléaire selon un second degré d'enrichissement d'uranium U-235 pratiquement identique au premier degré d'enrichissement d'uranium U-235, et
- les pastilles à forte concentration en oxyde de gadolinium contiennent en plus du combustible nucléaire selon un troisième degré d'enrichissement d'uranium U-235 nettement inférieur au premier degré d'enrichissement d'uranium U-235.

5. Ensemble combustible selon les revendications précédentes,
**caractérisé en ce que**
la concentration moyenne en oxyde de gadolinium est une concentration supérieure à 2,5 % en poids et inférieure à 3,5 % en poids par rapport au poids de la pastille.

6. Ensemble combustible selon les revendications précédentes,
**caractérisé en ce que**
dans au moins certaines barres de combustible nucléaire contenant des pastilles à concentration moyenne en oxyde de gadolinium, toutes les pastilles ont une concentration moyenne en oxyde de gadolinium.

7. Ensemble combustible selon les revendications précédentes,
**caractérisé en ce que**
dans au moins certaines barres de combustible nucléaire contenant des pastilles ayant une concentration moyenne en oxyde de gadolinium, seules certaines des pastilles ont une concentration moyenne en oxyde de gadolinium.

8. Ensemble combustible selon les revendications précédentes,
**caractérisé en ce que**
dans au moins certaines des barres de combustible nucléaire contenant des pastilles à forte concentration en oxyde de gadolinium, toutes les pastilles ont une forte concentration en oxyde de gadolinium.

9. Ensemble combustible selon les revendications précédentes,
**caractérisé en ce que**
dans au moins certaines des barres de combustible nucléaire contenant des pastilles à concentration élevée en oxyde de gadolinium, seules certaines des pastilles ont une forte concentration en oxyde de gadolinium.

10. Ensemble combustible selon les revendications précédentes,
**caractérisé en ce qu'**
un ensemble de barres de combustible nucléaire contient des pastilles à faible concentration en oxyde de gadolinium supérieure ou égale à 0,5 % en poids et inférieure ou égale à 2 % en poids.

11. Ensemble combustible selon la revendication 10,
**caractérisé en ce qu'**
il comporte un nombre total T de barres de combustible nucléaire avec un nombre C de barres contenant des pastilles à faible concentration en oxyde de gadolinium avec telle que 2 ≤ C ≤ 15 % de T.

12. Ensemble combustible selon la revendication 11,
**caractérisé en ce qu'**
on a 2 ≤ C ≤ 10 % de T.

13. Ensemble combustible selon les revendications 10 à 12,
**caractérisé en ce que**
dans les barres à combustible nucléaire qui ne comportent pas de pastilles avec de l'oxyde de gadolinium, les pastilles ont un premier degré d'enrichissement d'uranium U-235, et les pastilles à faible concentration en oxyde de gadolinium ont en plus du combustible nucléaire avec un quatrième degré d'enrichissement en uranium U-235, qui est pratiquement identique au premier degré d'enrichissement d'uranium U-235.

14. Ensemble combustible selon les revendications précédentes,
**caractérisé en ce que**
les barres de combustible nucléaire qui ont des pastilles avec de l'oxyde de gadolinium ne sont pas dans les rangées extérieures de l'assemblage combustible.

15. Ensemble combustible selon les revendications précédentes,
**caractérisé en ce que**
l'élément de combustible comporte un ensemble de positions externes de barres de contrôle pour permettre l'insertion des barres externes de contrôle dans l'ensemble, les barres de combustible nucléaire avec des pastilles à oxyde de gadolinium étant placées dans des positions adjacentes aux positions externes des barres de contrôle.

16. Ensemble combustible selon la revendication 15,
**caractérisé en ce que**
les barres de combustible nucléaire avec des pastilles à oxyde de gadolinium, sont placées dans des positions diagonalement adjacentes à celles des positions des barres de contrôle.

17. Ensemble combustible selon les revendications précédentes,
**caractérisé en ce qu'**
il comporte un châssis qui définit une matrice de positions, ces positions étant les positions de placement des barres de combustible nucléaire et les positions pour recevoir les barres externes de contrôle, la matrice de positions étant formée de NxN positions avec N ≥ 14.

18. Ensemble combustible selon la revendication 17, dans laquelle
N ≥ 17.

19. Ensemble combustible selon les revendications précédentes,
**caractérisé en ce que**
les barres de combustible nucléaire avec des pastilles d'oxyde de gadolinium sont réparties selon une symétrie de rotation d'ordre quatre dans l'ensemble combustible.

20. Ensemble combustible selon les revendications 1 à 18,
**caractérisé en ce que**
les barres de combustible nucléaire avec des pastilles d'oxyde de gadolinium, sont distribuées symétriquement dans l'ensemble combustible.

21. Procédé de chargement d'ensembles combustibles dans le coeur d'un réacteur nucléaire comprenant l'étape de mise en place dans le coeur d'une pluralité d'unités d'ensembles combustibles,
**caractérisé en ce qu'**
au moins certains des ensembles sont des ensembles combustibles selon les revendications précédentes.

22. Procédé selon la revendication 21,
**caractérisé en ce qu'**
au moins certains des ensembles sont des ensembles combustibles selon la revendication 20 avec une distribution asymétrique dans l'ensemble des barres comportant des pastilles à oxyde de gadolinium, le chargement du coeur du réacteur nucléaire étant effectué de façon que les barres à pastilles d'oxyde de gadolinium y soient disposées symétriquement.
